# EUROPEAN PATENT APPLICATION

(11) **EP 4 481 518 A1**
(43) Date of publication of application: **25.12.2024**
(21) Application number: 23755791.3
(22) Date of filing: 15.02.2023
(51) Int. Cl.: G05B 19/404, G01B 21/00

(54) **DISTANCE COMPENSATION METHOD FOR OPERATING APPERATUS DURING RELATIVE MOTION OF TWO WORKPIECES**

(30) Priority: 15.02.2022 CN 202210138238
(71) Applicant: Parcan NanoTech Co., Ltd, Shanghai 201821 (CN)
(72) Inventor: ZHOU, Xiangqian, Shanghai 201821 (CN)
(74) Representative: Viering, Jentschura & Partner mbB Patent- und Rechtsanwälte
(86) International application number: PCT/CN2023/076069
(87) International publication number: WO 2023/155789

(57) **Abstract**

Embodiments of the present application provide an operating device and a for method for compensating a spacing between two workpieces in relative movement, and relate to the fields of measurement, control and precision machining technology. In the operating device, a control system controls a first workpiece assembly and a second workpiece assembly to move relative to each other in a first direction and drives a first sensor to move to a target measurement position, and measures a first distance between the first workpiece assembly and the second workpiece assembly by the first sensor; the control system controls the first workpiece assembly and the second workpiece assembly to move relative to each other in a first direction and drives the second sensor to move to the target measurement position, and measures a second distance between the first workpiece assembly and the second workpiece assembly by the second sensor; the control system generates a control signal based on a first difference between the first distance and the second distance; the device for compensating spacing adjusts the vertical spacing between the first workpiece assembly and the second workpiece assembly in the second direction according to the control signal. The present application enhances the measurement or machining accuracy of the operating device.

## Description

### Cross-references to related application

This patent application claims priority to Chinese patent application No. 2022101382385 filed on February 15, 2022, entitled "Operating device and method for compensating a spacing between two workpieces during relative movement", the entire text of which is incorporated herein by reference.

### Technical field

The present application relates to the field of measurement, control, and precision machining technology, and specifically to an operating device and a method for compensating a spacing between two workpieces during relative movement.

### Background technology

When using a machining workpiece (including a measurement sensor) to measure or machine a measured and/or machined workpiece or sample placed on a workbench, the machining workpiece is generally smaller than the machined workpiece, so it is often necessary to control the movement of the machining workpiece in the horizontal direction with respect to the machined sample in order to complete the operations of the entire machined workpiece, such as measurement, machining, etc., which places high demands on the positioning accuracy of the machining workpiece when it is moved in the horizontal direction.
machining operations herein comprise measuring a surface to be measured, cutting the surface of the machined workpiece with a tool, irradiating the surface to be machined with electron, photon or ion beams, e.g. irradiating the photoresist-coated surface to achieve photolithography or bombarding the surface with electron, photon and ion beams to form an etching of the surface, and so on.

In general, when the machining workpiece moves in the horizontal direction with high precision relative to each other, the distance between the machining workpiece and the measured sample in the vertical direction is prone to deviation. For example, when the machining workpiece moves 300 mm in the horizontal direction, the spacing deviation in the vertical direction reaches 10 microns, while the deviation range allowed in the current precise positioning scenario is 10 to 30 nanometers, and this micron-level vertical spacing deviation will be superimposed on the spacing of the machining workpiece and the machined workpiece, and as a result of superimposing these deviations, the total spacing deviation will be far more than the allowed deviation range, which greatly reduces the accuracy of the measurement or machining of the machining workpiece. This is one of the main reasons why nanometer-level precision machining is so difficult.

### Summary of the invention

An object of the present application is to provide an operating device and a method for compensating a spacing between two workpieces during relative movement, realizing the compensation of the amount of relative spacing deviation generated during the relative movement of a first workpiece assembly and a second workpiece assembly in a first direction, reducing the deviation of the vertical spacing between the first workpiece assembly and the second workpiece assembly in a second direction, and improving the measurement or machining accuracy of the operating device.

In order to achieve the above purpose, the present application provides an operating device comprising: a control system, a device for compensating spacing, a first workpiece assembly and a second workpiece assembly, said control system being communicatively connected to said first workpiece assembly and/or said second workpiece assembly, said first workpiece assembly being provided with a first sensor and a second sensor facing said second workpiece assembly; said first workpiece said first workpiece assembly and/or said second workpiece assembly is provided with the device for compensating spacing, said control system is communicatively connected to said device for compensating spacing, said first sensor and said second sensor, respectively; said control system is used to control the said first workpiece assembly and said second workpiece assembly to move relative to each other in a first direction and drive said first sensor to a target measurement position, and to measure a first distance between said first workpiece assembly and said second workpiece assembly by said first sensor, said control system is used to control said first workpiece assembly and said second workpiece assembly to move relative to each other in the first direction and drive said second sensor to said target measurement position, and to measure a second distance between said first workpiece assembly and said second workpiece assembly by said second sensor; said control system is further used to generate a control signal based on a first difference obtained by subtracting said second distance from said first distance and send said control signal to said device for compensating spacing; said device for compensating spacing is used to adjust a vertical spacing between said first workpiece assembly and said second workpiece assembly in a second direction based on said control signal, the second direction is perpendicular to or has a vertical component to the first direction.

The present application further provides a method for compensating a spacing between two workpieces during relative movement, applied to the operating device mentioned above, said method comprising: controlling a first workpiece assembly and a second workpiece assembly to move relative to each other in a first direction and drive the first sensor to move to a target measurement position, measuring a first distance between said first workpiece assembly and said second workpiece assembly by said first sensor; controlling said first workpiece assembly and said second workpiece assembly to move relative to each other in a first direction and drive the second sensor to said target measurement position, measuring a second distance between said first workpiece assembly and said second workpiece assembly by said second sensor; generating a control signal based on a first difference of said first distance minus said second distance, and using said control signal to control said device for compensating spacing to adjust a vertical spacing between said first workpiece assembly and said second workpiece assembly in a second direction, the second direction is perpendicular to or has a vertical component to the first direction.

In an embodiment of the present application, the control system first controls the first workpiece assembly and the second workpiece assembly to move relative to each other in the first direction and drives the first sensor to the target measurement position, and then measures the first distance between the first workpiece assembly and the second workpiece assembly by the first sensor; the control system then controls the first workpiece assembly and the second workpiece assembly to move relative to each other in a first direction and drives the second sensor to the target measurement position, and then measures the second distance between the first workpiece assembly and the second workpiece assembly by the second sensor, and the first difference of subtracting the second distance from the first distance characterizes an amount of deviation generated in the second direction which is perpendicular to or has a vertical component to the first direction when the first workpiece assembly and the second workpiece assembly move relative to each other in the first direction, and the control system can generate the corresponding control signal according to the first difference, and send the control signal to the device for compensating spacing, which adjusts the vertical spacing between the first workpiece assembly and the second workpiece assembly in the second direction according to the control signal, and the first direction is perpendicular to the second direction; that is, it realizes the compensation for the amount of relative spacing deviation generated during the relative movement of the first workpiece assembly and the second workpiece assembly in the first direction, and reduces the deviation of the first workpiece assembly and the second workpiece assembly in the sencond direction, and improves the measurement or machining accuracy of the operating device.

In one embodiment, said control system is used to generate a control signal for adjusting the vertical spacing between said first workpiece assembly and said second workpiece assembly to increase said first difference when said first difference is greater than zero; and said device for compensating spacing is used to generate a control signal for adjusting the vertical spacing between said first workpiece assembly and said second workpiece assembly to decrease the absolute value of said first difference when said first difference is less than zero.

In one embodiment, said first workpiece assembly is further provided with a third sensor facing said second workpiece assembly; said third sensor is communicatively connected to said control system; said control system is further used to control said first workpiece assembly and said second workpiece assembly to move relative to each other in a first direction and drive said third sensor to said target measurement position, and to measure a third distance between said first workpiece assembly and said second workpiece assembly by said third sensor; said control system is further used to calculate a second difference obtained by subtracting said third distance from said first distance, and determine whether it is necessary to repeat the compensating for the vertical spacing between said first workpiece assembly and said second workpiece assembly based on said first difference and said second difference.

In one embodiment, said control system is used to determine that it is unnecessary to repeat the compensating for the vertical spacing between said first workpiece assembly and said second workpiece assembly when the absolute value of the difference between said first difference and said second difference is less than a preset difference threshold; said control system is used to determine that it is necessary to repeat the compensating for the vertical spacing between said first workpiece assembly and said second workpiece assembly when the absolute value of the difference between said first difference and said second difference is greater than or equal to the preset difference threshold.

In one embodiment, said first workpiece assembly and said second workpiece assembly move relative to each other in the first direction at a rate less than the rate at which said device for compensating spacing adjusts the change in vertical spacing between said first workpiece assembly and said second workpiece assembly in the second direction.

In one embodiment, said first workpiece assembly comprises: a first abutment, a first workpiece fixed on said first abutment and a plurality of probes provided on said first workpiece; said first sensor and said second sensor are two different probes of said first workpiece; said second workpiece assembly comprises: a second abutment and a second workpiece provided on said second abutment; said device for compensating spacing is provided between said first abutment and said first workpiece, and/or said device for compensating spacing is provided between said second abutment and said second workpiece; said target measurement position corresponds to a preset area on the surface to be operated of said second workpiece; said probe is used to measure the distance between the tip of said probe and the surface to be operated of said second workpiece; said distance compensation device is used to adjust the vertical spacing between said first workpiece and said first workpiece according to said control signal.

In one embodiment, said first workpiece assembly comprises: a first abutment, a first workpiece fixed on said first abutment, and a sensor auxiliary member fixed to said first workpiece; said first sensor and said second sensor are fixed to said sensor auxiliary member; said second workpiece assembly comprises: a second abutment, a second workpiece on said second abutment, and a measured auxiliary member fixed to said second workpiece; said device for compensating spacing is provided between said first abutment and said first workpiece, and/or said device for compensating spacing is provided between said second abutment and said second workpiece; said target measurement position corresponds to a preset area on said test auxiliary member; said first sensor is used to measure the distance between said sensor auxiliary member and said preset area on said measured auxiliary member; said second sensor is used to measure the distance between said sensor auxiliary member and said preset area on said measured auxiliary member; said device for compensating spacing is used to adjust a vertical spacing between said first workpiece and said second workpiece according to said control signal.

In one embodiment, said first workpiece assembly comprises: a first abutment, a first workpiece fixed to said first abutment, a first abutment auxiliary member fixed to said first abutment, and a sensor auxiliary member fixed to said first abutment auxiliary member; said first sensor and said second sensor are fixed to said sensor auxiliary member; said second workpiece assembly comprises: a second abutment, a second workpiece provided on said second abutment, a second abutment auxiliary member fixed to said second abutment, and a measured auxiliary member fixed to said second abutment auxiliary member; said device for compensating spacing is provided between said first abutment and said first workpiece, and/or said device for compensating spacing is provided between said second abutment and said second workpiece; said target measurement position corresponds to a preset area on said measured auxiliary member; said first sensor is used for measuring the distance between said sensor auxiliary and said preset area on said measured auxiliary; said second sensor is used for measuring the distance between said sensor auxiliary and said preset area on said measured auxiliary; said device for compensating spacing is used for adjusting the vertical spacing between said first workpiece and said second workpiece according to said control signal.

In one embodiment, said first workpiece assembly comprises: a first abutment, a first workpiece fixed to said first abutment and a machining member fixed to said first workpiece; said first sensor and said second sensor are fixed to said first workpiece; said second workpiece assembly comprises: a second abutment, a workpiece fixing portion and a second workpiece, said second workpiece is fixed to said second abutment by said workpiece fixing portion said device for compensating spacing is provided between said first abutment and said first workpiece, and/or said device for compensating spacing is provided between said second abutment and said workpiece fixing portion, said machining member is used for machining said second workpiece, said target measurement position corresponds to a preset area of an unmachined portion of said second workpiece, or said target measurement position corresponds to a preset area of a machined portion of said second workpiece; said first sensor is used for measuring the distance between said first workpiece and the preset area of said second workpiece; said second sensor is used for measuring the distance between said first workpiece and the preset area of said second workpiece; said device for compensating spacing is used for adjusting the vertical distance between said first workpiece and said second workpiece according to said control signal.

In one embodiment, said device for compensating spacing comprises any one of the following: a piezoelectric element, a thermal expansion element, and a flat capacitor.

### Description of the drawings

FIG. 1 is a block schematic diagram of an operating device according to a first embodiment of the present application;
FIG. 2 is a schematic diagram of an operating device according to a first embodiment of the present application, wherein the first abutment is connected to the first workpiece via a device for compensating spacing;
FIG. 3 is a schematic diagram of an operating device according to a first embodiment of the present application, wherein the second abutment is connected to the second workpiece via a device for compensating spacing;
FIG. 4 is a schematic diagram of an operating device according to a first embodiment of the present application, wherein a first abutment is connected to a first workpiece via a device for compensating spacing, and a second abutment is connected to a second workpiece via a device for compensating spacing;
FIG. 5 is a schematic diagram of an operating device according to a first embodiment of the present application, wherein both the first sensor and the second sensor are fixed to the sensor auxiliary member;
FIG. 6 is a schematic diagram of an operating device according to a first embodiment of the present application, wherein the sensor auxiliary member is fixed to the first abutment via a first abutment auxiliary member, and the measured auxiliary member is fixed to the second abutment via a second abutment auxiliary member;
FIG. 7 is a schematic diagram of an operating device according to a first embodiment of the present application, wherein the target measurement position corresponds to a machined portion of the second workpiece;
FIG. 8 is a schematic diagram of an operating device according to a first embodiment of the present application, wherein the target measurement position corresponds to an unmachined portion of the second workpiece;
FIG. 9 is a specific flowchart of a method for compensating a spacing between two workpieces during relative movement according to a third embodiment of the present application;
FIG. 10 is a specific flowchart of a method for compensating a spacing between two workpieces during relative movement according to a fourth embodiment of the present application.

### Detailed description of embodiments

Each embodiment of the present application will be described in detail hereinafter in conjunction with the accompanying drawings for a clearer understanding of the purposes, features and advantages of the present application. It should be understood that the embodiments shown in the accompanying drawings are not intended to be a limitation of the scope of the present application, but are merely intended to illustrate the substantive spirit of the technical solution of the present application.

In the following description, certain specific details are set forth for the purpose of illustrating various disclosed embodiments to provide a thorough understanding of various disclosed embodiments. However, those skilled in the related art will recognize that embodiments may be practiced without one or more of these specific details. In other cases, familiar devices, structures, and techniques associated with the present application may not be shown or described in detail so as to avoid unnecessarily confusing the description of the embodiments.

Unless the context requires otherwise, throughout the specification and the claims, the words "including" and variants thereof, such as "comprising" and "having", are to be understood as open-ended and inclusive meaning, i.e., should be interpreted as "including, but not limited to".

References to "one embodiment" or "an embodiment" throughout the specification indicate that a particular feature, structure, or characteristic described in conjunction with an embodiment is included in at least one embodiment. Therefore, the occurrence of "in one embodiment" or "in an embodiment" at various locations throughout the specification need not all refer to the same embodiment. In addition, particular features, structures or characteristics may be combined in any manner in one or more embodiments.

As used in the specification and in the appended claims, the singular forms "a" and "an" include plural referents, unless the context clearly provides otherwise. It should be noted that the term "or" is normally used in its inclusive sense of "or/and", unless the context clearly provides otherwise.

In the following description, in order to clearly show the structure and working method of this application, it will be described with the help of many directional words, but words such as "front", "back", "left", "right", "outside", "inside", "outward", "inward", "up", "down", and the like should be understood as convenient terms and not as limiting terms.

A first embodiment of the present application relates to an operating device for performing a measurement or machining operation on a sample to be operated, such as measuring a surface topography of the sample to be operated, photolithographically exposing a surface of the sample to be operated, performing a cutting operation on the sample to be operated, and the like.

The operating device comprises: a control system, a device for compensating spacing, a first workpiece assembly, and a second workpiece assembly, wherein one of the first workpiece assembly and the second workpiece assembly is used for assembling an operating workpiece and the other is used for placing a sample to be operated. The present embodiment and subsequent embodiments are illustrated as an example in which the first workpiece assembly is used for assembling the operating workpiece, the second workpiece assembly is used for placing the sample to be operated, and the first workpiece assembly is placed directly above the second workpiece assembly. Wherein, the control system may be a computer mainframe, a laptop computer, and the like including a controller, a processor, and the like.

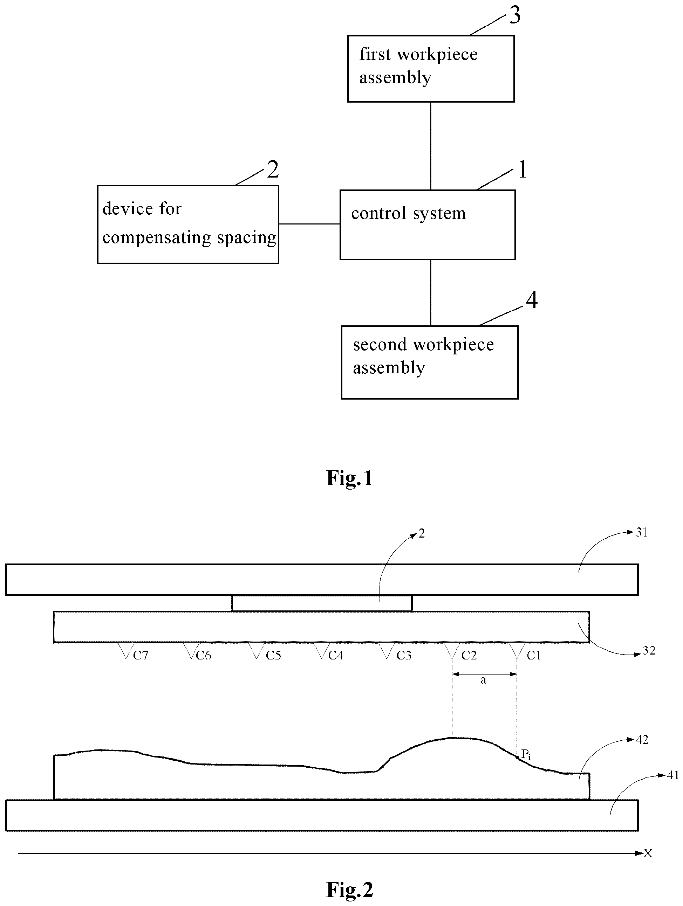

Referring to Fig. 1, the operating device comprises a control system 1, a device for compensating spacing 2 (only one device for compensating spacing 2 is schematically drawn in Fig. 1), a first workpiece assembly 3, and a second workpiece assembly 4, the control system 1 is communicatively connected to the first workpiece assembly 3 and/or said second workpiece assembly 4, i.e., the control system 1 is communicatively connected to the first workpiece assembly 3 or said second workpiece assembly 4, or the controller system 1 is communicatively connected to both the first workpiece assembly 3 and said second workpiece assembly 4 (this is taken as an example in Fig.1), the first workpiece assembly 3 and the second workpiece assembly 4 is movable relative to each other in a first direction. The first workpiece assembly 3 is provided with a first sensor and a second sensor facing the second workpiece assembly 4, the first workpiece assembly 3 and/or the second workpiece assembly 4 are provided with the device for compensating spacing 2, the control system 1 is communicatively connected to the device for compensating spacing 2, and the first sensor and the second sensor are communicatively connected to the control system 1 respectively. Wherein the first sensor and the second sensor are both sensors having a distance measuring function, for example, a photonic sensor, a laser distance measuring sensor, an electronic sensor, an ion sensor, or an atomic force sensor (scanning probe sensor), and the like. Wherein the first direction may be a mutually parallel direction between the first workpiece assembly 3 and the second workpiece assembly 4, for example a horizontal direction.

For example, the operating device is used for scanning measurement of the surface topography of the sample to be operated, i.e., the operating device is capable of performing nanometer-level spatially resolved measurements of physical and chemical quantities on the surface to be operated of the sample (e.g., a wafer, a silicon wafer, a quartz wafer, etc.). It is also possible to perform scanning probe lithography (SPL), emission of electrons and photons to the surface, as well as emission of ions to the surface to form ion implantation. The accuracy of all these measurements and operations is related to the precise control of the spacing between the operating device and the surface to be operated.

Other examples include improvements in the machining accuracy of machine tools used for machining. Machine tools herein are defined as lathes, planers, milling machines, and the like. The present application may improve machining accuracy by improving the dynamic and precise control of the spacing of the tool to the workpiece being machined.

Referring to FIGS. 2 to 4 (the control system 1 is not shown), the first workpiece assembly 3 comprises: a first abutment 31, a first workpiece 32 fixed to the first abutment 31, and a plurality of probes (the tips of the plurality of probes are located in the same horizontal plane) provided on the first workpiece 32, the plurality of probes can form a probe array, and in FIG. 2, for example, seven probes are provided on the first workpiece 32, and the seven probes are respectively labeled as Probe C1 to Probe C7; wherein the distance between two neighboring probes may be equal or unequal, for example, in the present embodiment as well as subsequent embodiments, the distance between the tips of two neighboring probes is equal.

The first sensor and the second sensor are two different probes in the plurality of probes, and hereafter, it is an example where the first sensor is probe C1 and the second sensor is probe C2. The second workpiece assembly 4 includes: a second abutment 41 and a second workpiece 42 provided on the second abutment 41, the second workpiece 42 is a sample to be operated, a plurality of probes are used on the surface to be operated of the second workpiece 42 to measure the spacing between the first workpiece and the second workpiece (of course, it is not ruled out that these probes are also to carry out other measurements, such as topographic measurement on the surface to be operated), and each probe is used to measure the distance between the tip of the probe and the surface to be operated of the second workpiece 42, specifically, each probe can measure a corresponding area on the surface to be operated to obtain height information of the corresponding area. Wherein the area on the surface to be operated is any of the following: a pixel point, a line formed by a plurality of pixel points, and a surface combined by a plurality of pixel points; that is, the area on the target surface may be divided according to the pixel point, with each pixel point serving as one area; or, the area on the target surface is divided according to the line, with each region being a line formed by the adjacent plurality of pixel points; or, the area on the target surface is divided according to the surfaces, each area being a surface formed by a combination of a plurality of neighboring pixel points.

In this embodiment, the target measurement position corresponds to a preset area on the surface to be operated of the second workpiece 43. It should be noted that in this embodiment as well as in subsequent embodiments, the area is one pixel point, for example, i.e., the probe is used to measure the distance between the tip and one point on the surface to be operated; in FIG. 2, the target measurement position corresponds to a point Pᵢ (Xᵢ , Yᵢ ) on the surface to be operated, for example, with Xᵢ indicating the transverse coordinate of the point Pᵢ on the surface to be operated, and Y; indicating the longitudinal coordinate of the point Pᵢ on the surface to be operated.

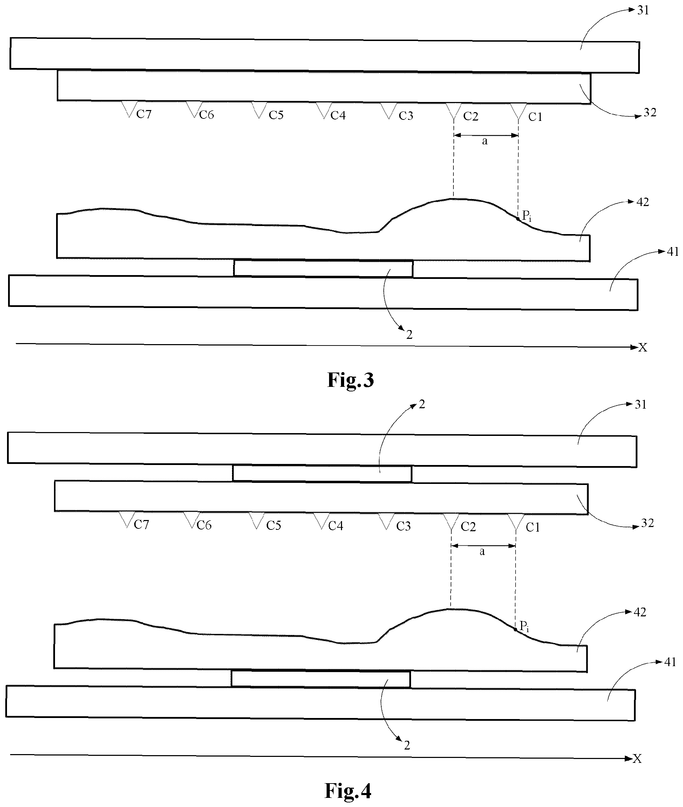

In this embodiment, the first abutment 31 is provided with a device for compensating spacing 2 between the first abutment 31 and the first workpiece 32, and/or a device for compensating spacing 2 is provided between the second abutment 41 and the second workpiece 42. i.e., in the operating device, the first abutment 31 can be connected to the first workpiece 32 via the device for compensating spacing 2, so that the height of the first workpiece 32 can be adjusted by the device for compensating spacing 2, realizing the spacing adjustment between the first workpiece 32 and the second workpiece 42, referring to FIG. 2; alternatively, the second abutment 41 can be connected to the second workpiece 42 via the device for compensating spacing 2, so that the height of the second workpiece 42 can be adjusted via the device for compensating spacing 2, realizing the spacing adjustment of between the first workpiece 32 and the second workpiece 42, referring to FIG. 3; alternatively, the first abutment 31 can be connected to the first workpiece 32 via the distance compensation device 2, and the second abutment 41 can be connected to the second workpiece 42 via the device for compensating spacing 2, whereby the spacing between the first workpiece 32 and the second workpiece 42 can be adjusted by these two device for compensating spacings 2, or any one of the device for compensating spacings 2, with reference to FIG. 4. It is should be noted that in the present embodiment as well as the subsequent embodiments, as shown in FIG. 2, only the device for compensating spacing 2 is provided between the first abutment 31 and the first workpiece 32 as an example for illustration.

In this embodiment, the operating device may utilize the distance compensation device 2 to compensate the spacing between the first workpiece 32 and the second workpiece 42, and the specific spacing compensation process is described below. The X direction shown in FIGS. 2 to 4 is a first direction of relative movement of the first workpiece assembly 3 and the second workpiece assembly 4.

The control system 1 controls the first workpiece assembly 3 and the second workpiece assembly 4 to move relative to each other in the first direction, drives the first sensor to move to the target measurement position, and measures the first distance between the first workpiece assembly 3 and the second workpiece assembly 4 by the first sensor. Specifically, the first abutment 31 of the first workpiece assembly 3 is connected to a driving device, or the first abutment 31 contains a driving device, and the control system 1 is connected to the driving device and controls the driving device to drive the first abutment 31 to move in the first direction according to a preset speed, driving the probe C1 (i.e., the first sensor) to move to the target measurement position at time t; when the probe C1 is at the target measurement position, it is possible to measure the distance D_{C1Pi} between the tip of the probe C1 and the point Pᵢ (Xᵢ, Yᵢ ), the distance D_{C1Pi} is the first distance between the first workpiece assembly 3 and the second workpiece assembly 4, i.e., the distance D_{C1Pi} is the first distance between the first workpiece 32 and the second workpiece 42.

It should be noted that this embodiment is illustrated as an example by driving the first abutment 31 by means of a driving device (and will continue to be illustrated by this example subsequently), but without being limited thereto, it is also possible to drive the second abutment 41 by means of a driving device connected to or provided in the second abutment 41, so as to cause a relative movement between the first workpiece 32 and the second workpiece 42, and drive the first sensor to move to the target measurement position.

The control system 1 then controls the first workpiece assembly 3 and the second workpiece assembly 4 to move relative to each other in the first direction, drive the second sensor to move to the target measurement position, and measure the second distance between the first workpiece assembly 3 and the second workpiece assembly 4 by the second sensor. Specifically, the control system 1 then controls the driving device to drive the first abutment 31 to move in the first direction according to a preset speed to drive the probe C2 (i.e., the second sensor) to move to the target measurement position at time (t + Δt), i.e., the first abutment 31 has moved the distance a in time Δt; when the probe C2 is in the target measurement position, the distance D_{C2Pi} between the tip of the probe C2 and the point Pᵢ (Xᵢ, Yᵢ ) can be measured, the distance D_{C2Pi} is the second distance between the first workpiece assembly 3 and the second workpiece assembly 4, i.e., the distance D_{C2Pi} is the second distance between the first workpiece 32 and the second workpiece 42.

The control system 1 then calculates the first difference ΔD_{C1C2Pi} by subtracting the second distance D_{C2Pi} from the first distance D_{C1Pi}, i.e., the first difference ΔD_{C1C2Pi} =D_{C1Pi} -D_{C2Pi} , and the first difference ΔD_{C1C2Pi} characterizes the amount of the deviation generated in the second direction perpendicular to the first direction during the movement of the first abutment 31 in the first direction in the time Δt, whereby the control system 1 can generate a control signal based on the first difference ΔD_{C1C2Pi}, and send the generated control signal to the device for compensating spacing. Specifically, when the first difference ΔD_{C1C2Pi} is greater than zero, it is indicated that during the movement of the probe C2 (i.e., the second sensor) to the target measurement position at time (t + Δt), the vertical spacing between the first workpiece 32 and the second workpiece 42 in the second direction (it is to be noted that the vertical spacing mentioned thereafter is the vertical spacing in the second direction) is reduced by the first difference ΔD_{C1C2Pi} , and the control system 1 generates a control signal for adjusting the vertical spacing between the first workpiece assembly 3 and the second workpiece assembly 4 to increase the first difference ΔD_{C1C2Pi} and sends it to the device for compensating spacing 2, and the device for compensating spacing 2 increases the vertical spacing between the first workpiece 32 and the second workpiece 42 when it receives the control signal, and the amount of increase in the vertical spacing is the first difference ΔD_{C1C2Pi}. It is to be noted that in the present embodiment as well as in subsequent embodiments are illustrated with the first direction being perpendicular to the second direction as an example, and the second direction may also be any direction in which there is a vertical component between it and the first direction.

When the first difference ΔD_{C1C2Pi} is less than zero, it means that during the movement of the probe C2 (i.e., the second sensor) to the target measurement position at time (t + Δt), the vertical spacing between the first workpiece 32 and the second workpiece 42 is increased by the first difference ΔD_{C1C2Pi} , and the control system 1 generates a control signal for adjusting the vertical spacing between the first workpiece assembly 3 and the second workpiece assembly 4 to reduce the first difference ΔD_{C1C2Pi} and sends it to the device for compensating spacing 2, the device for compensating spacing 2, upon receiving the control signal, reduces the vertical spacing between the first workpiece 32 and the second workpiece 42, and the amount of reduction of the vertical spacing is the absolute value of the first difference ΔD_{C1C2Pi}.

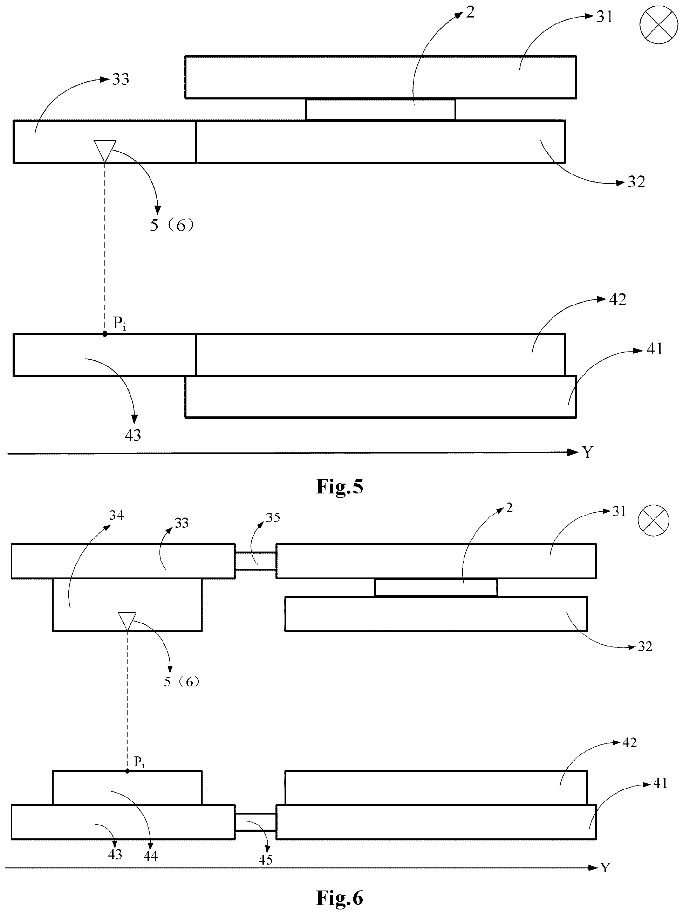

In another embodiment, referring to FIGS. 5 to 8, the measurement of the spacing between the first workpiece 32 and the second workpiece 42 may also be achieved by a sensor auxiliary member provided on the side of the first workpiece 32 and a measured auxiliary member provided on the side of the second workpiece 42, which are exclusively used as an auxiliary extension provided for the measurement, and it is suitable to application scenarios in which it is not convenient to provide a sensor on the first workpiece 32. For example, the first workpiece 32 is a machining tool, and the surface of the second workpiece 42 facing the first workpiece 32 is the surface to be operated, in which case it is not convenient to provide a sensor on the machining tool, and the distance measurement can be carried out with the aid of the sensor auxiliary member on the side of the first workpiece 32 and the measured auxiliary member on the side of the second workpiece 42.

Referring to FIG. 5, the first workpiece assembly 3 comprises: a first abutment 31, a first workpiece 32 fixed to the first abutment 31, and a sensor auxiliary member 33 fixed to the first workpiece 32; the first sensor 5 and the second sensor 6 are fixed to the sensor auxiliary member 33, respectively. The second workpiece assembly 4 comprises: a second abutment 41, a second workpiece 42 provided on the second abutment 41, and a measured auxiliary member 43 fixed to the second workpiece 42. Wherein the first sensor 5 and the second sensor 6 overlap in the view of FIG. 5, and the direction of relative movement of the first workpiece assembly 3 and the second workpiece assembly 4 is perpendicular to the Y direction in FIG. 5.

In this embodiment, it may be provided that the first workpiece 32 is an operating workpiece and the second workpiece 42 is the sample to be operated.

The device for compensating spacing 2 is provided between the first abutment 31 and the first workpiece 32, and/or the device for compensating spacing 2 is provided between the second abutment 41 and the second workpiece 42 As exemplified in Fig. 5, the device for compensating spacing 2 is only provided between the second abutment 41 and the first workpiece 32. The case in which the device for compensating spacing 2 is provided between the second abutment 41 and the second workpiece 42, and the case in which the device for compensating spacing 2 is provided between the first abutment 31 and the first workpiece 32 and the device for compensating spacing 2 is provided between the second abutment 41 and the second workpiece 42 are similar to FIG. 3 and FIG. 4, and will not be repeated herein.

The target measurement position corresponds to a preset area on the upper surface of the measured auxiliary member 43; wherein the preset area may be provided with a surface structure that facilitates the measurement to make it simpler and more precise for the first sensor 5, the second sensor 6 to locate the position of the preset area on the surface of the second workpiece, which contributes to a more accurate distance measurement.

The first sensor 5 is used to measure the distance between the sensor auxiliary member 33 and the preset area on the measured auxiliary member 43. The second sensor 6 is used to measure the distance between the sensor auxiliary member 33 and the preset area on the measured auxiliary member 43. In FIG. 5, with the point Pᵢ (Xᵢ, Yᵢ ) denoting the preset area on the measured auxiliary 43, both the first sensor 5 and the second sensor 6 are used to measure the distance between the sensor auxiliary member 33 and the point Pᵢ (Xᵢ, Yᵢ).

The distance compensation device 2 is used to adjust the vertical spacing between the first workpiece 32 and the second workpiece 42 according to the control signal.

It should be noted that the specific process of compensating the vertical spacing between the first workpiece 32 and the second workpiece 42 by utilizing the first sensor 5, the second sensor 6, and the device for compensating spacing 2 is similar to the foregoing, and will not be repeated herein.

In another embodiment, referring to FIG. 6, the first workpiece assembly 3 comprises: a first abutment 31, a first workpiece 32 fixed to the first abutment 31, a first abutment auxiliary member 33 fixed to the first abutment 31, and a sensor auxiliary member 34 fixed to the first abutment auxiliary member 33; and the first sensor 5 and the second sensor 6 are fixed to the sensor auxiliary member 34, respectively. The second workpiece assembly 4 comprises: a second abutment 41, a second workpiece 42 disposed on the second abutment 41, a second abutment auxiliary member 43 fixed to the second abutment 41, and an measured auxiliary member 44 fixed to the second abutment auxiliary member 43, wherein the first abutment 31 can be fixed to the first abutment auxiliary member 33 by a first abutment fixing portion 35, and the second abutment 41 can be fixed to the second abutment auxiliary member 43 by a second abutment fixing portion 45; the first sensor 5 and the second sensor 6 overlap in the view of FIG. 6, and the direction of relative movement of the first workpiece assembly 3 and the second workpiece assembly 4 is perpendicular to the Y direction in FIG. 5.

In this embodiment, it may be provided that the first workpiece 32 is an operating workpiece and the second workpiece 42 is the sample to be operated.

The device for compensating spacing 2 is provided between the first abutment 31 and the first workpiece 32, and/or the device for compensating spacing 2 is provided between the second abutment 41 and the second workpiece 42. As exemplified in Fig. 6, the device for compensating spacing 2 is only provided between the second abutment 41 and the first workpiece 32, the cases in which the distance compensation device 2 is provided between the second abutment 41 and the second workpiece 42, the distance compensation device 2 is provided between the first abutment 31 and the first workpiece 32 and the distance compensation device 2 is provided between the second abutment 41 and the second workpiece 42 are similar to FIGS. 3 and 4, and will not be repeated herein.

The target measurement position corresponds to a preset area on the upper surface of the measured auxiliary member 44; wherein the preset area may be provided with a surface structure that facilitates the measurement to make it simpler and more accurate for the first sensor 5, the second sensor 6 to locate the position of the preset area on the measured surface of the second workpiece, which contributes to a more accurate distance measurement.

A first sensor 5 is used to measure the distance between the sensor auxiliary member 34 and the preset area on the measured auxiliary member 44. The second sensor 6 is used to measure the distance between the sensor auxiliary member 34 and the preset area on the measured auxiliary member 44. In FIG. 6, with point Pᵢ (Xᵢ, Yᵢ ) denoting the preset area on the measured auxiliary member 44, both the first sensor 5 and the second sensor 6 are used to measure the distance between the sensor auxiliary member 34 and the point Pᵢ (Xᵢ, Yᵢ).

The distance compensation device 2 is used to adjust the vertical spacing between the first workpiece 32 and the second workpiece 42 according to the control signal.

It should be noted that the specific process of compensating the vertical spacing between the first workpiece 32 and the second workpiece 42 by utilizing the first sensor 5, the second sensor 6, and the device for compensating spacing 2 is similar to the foregoing, and will not be repeated herein.

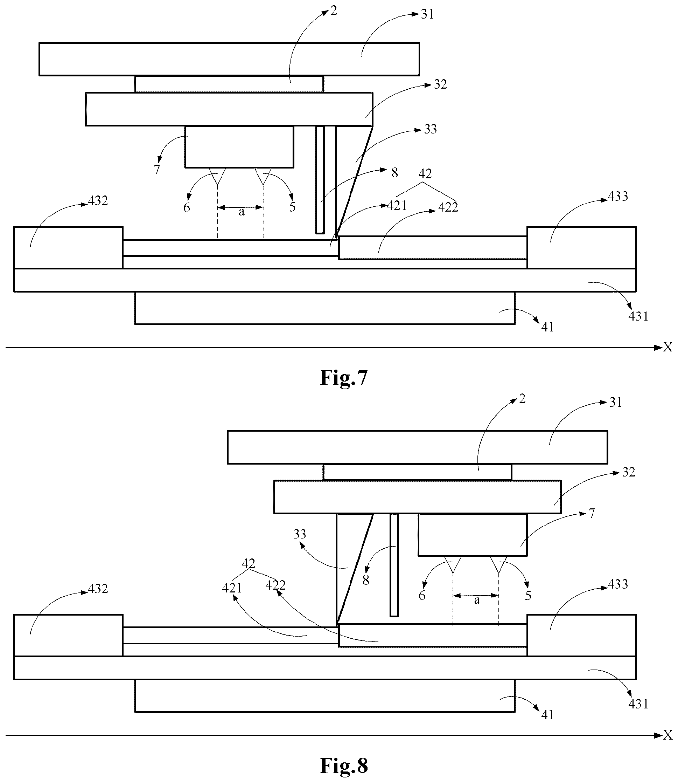

In another embodiment, referring to FIGS. 7 and 8, the first workpiece assembly 3 comprises: a first abutment 31, a first workpiece 32 fixed to the first abutment 31 and a machining member 33 fixed to the first workpiece 32; and the first sensor 5 and the second sensor 6 are fixed to the first workpiece 32, respectively. Wherein, the first sensor 5 and the second sensor 6 may be fixed to the first workpiece 32 by another fixing member 7, and the spacing between the first sensor 5 and the second sensor 6 is a. In one example, a baffle plate 8 is provided between the fixing member 7 and the machining member 33, to avoid solid particles generated during machining from affecting the first sensor 5 and the second sensor 6.

The second workpiece assembly 4 includes: a second abutment 41, a second workpiece 42, and a workpiece fixing portion, the second workpiece 42 is fixed to the second abutment 41 by the workpiece fixing portion. Specifically, the workpiece fixing portion includes a first fixing portion 431, a second fixing portion 432, and a third fixing portion 433, with one side of the first fixing portion 431 fixed to the second abutment 41, and the second fixing portion 432 and the third fixing portion 433 fixed to the two ends of the other side of the first fixing portion 431 respectively, whereby the first fixing portion 431, the second fixing portion 432, and the third fixing portion 433 form a groove in which the second workpiece 42 is fixed.

In FIGS. 7 and 8, the X direction is the direction of relative movement of the first workpiece assembly 3 and the second workpiece assembly 4.

The device for compensating spacing 2 is provided between the first abutment 31 and the first workpiece 32, and/or the device for compensating spacing 2 is provided between the second abutment 42 and the workpiece fixing portion, i.e., the device for compensating spacing 2 is provided between the second abutment 42 and the first fixing portion 431. As exemplified in Fig. 7 and 8, the device for compensating spacing 2 is provided between the second abutment 41 and the first workpiece 32, the case in which the device for compensating spacing 2 is provided between the second abutment 42 and the first fixed portion 431; and the case in which the device for compensating spacing 2 is provided between the first abutment 31 and the first workpiece 32, and the device for compensating spacing 2 is provided between the second abutment 42 and the first fixed portion 431 are similar to FIGS. 3 and 4, and will not be repeated herein.

The machining member 33 is used for machining the second workpiece 42; for example, the machining member 33 is a cutting tool for cutting the second workpiece 42.

The target measurement position corresponds to a preset area of the unmachined portion of the second workpiece 42, or the target measurement position corresponds to a preset area of the machined portion of the second workpiece 42. Specifically, the second workpiece 42 may be divided into a machined portion 421 and an un-machined portion 422, and in FIG. 7, in the direction of the movement of the first workpiece 32 relative to the second workpiece 42, the fixing member 7 fixed with the first sensor 5 and the second sensor 6 is located on the left side of the machining member 33, and at this time, the target measurement position corresponds to the preset area on the machined portion 421 of the second workpiece 42, and the first sensor 5 and the second sensor 6 are both used to measure the distance between the first workpiece 32 and the predset area on the machined portion 421. In FIG. 8, in the direction of movement of the first workpiece 32 relative to the second workpiece 42, the fixing member 7 fixed with the first sensor 5 and the second sensor 6 is located on the right side of the machining member 33, and at this time, the target measurement position corresponds to the preset area on the un-machined portion 422 of the second workpiece 42, and the first sensor 5 and the second sensor 6 are both used to measure the distance between the first workpiece 32 and the preset area on the un-machined portion 422.

The first fixing portion 431, the second fixing portion 432, and the third fixing portion 433 do not affect the machined portion 421 and the unmachined portion 422 of the second workpiece 42, and the second workpiece 42 may be relatively fixed relative to the workpiece fixing portion or rotated relative to the workpiece fixing portion.

The first sensor 5 is used to measure the distance between the first workpiece 32 and the preset area on the second workpiece 42.

The second sensor 6 is used to measure the distance between the first workpiece 32 and the preset area on the second workpiece 42.

The device for compensating spacing 2 is used to adjust the vertical spacing between the first workpiece and the second workpiece according to the control signal.

It should be noted that the specific process of compensating the vertical spacing between the first workpiece 32 and the second workpiece 42 by utilizing the first sensor 5, the second sensor 6, and the device for compensating spacing 2 is similar to the foregoing, and will not be repeated herein.

In the operating device shown in FIGS. 7 and 8, it is possible to ensure that when controlling a machining member 33 (e.g., a cutting tool) on the first workpiece 32 to cut the second workpiece 42 placed on the second abutment 41 (e.g., for a machine tool), the spacing between the cutting tool and the surface of the second workpiece 42 remains constant to avoid changing the depth of cut of the tool due to accidental vibration of the first workpiece 32 and/or the second workpiece 42, which improves the machining accuracy of the machining member 33 on the second workpiece 42, and is suitable for application scenarios in which the ultra-precision machining of a sample on an ultra-precision machine tool is performed. Wherein, the machining member 33 may also be a workpiece such as a grinding head of a grinder, a planer head of a planer, a milling head of a milling machine, etc.

In this embodiment, the speed of the relative movement of the first workpiece assembly 3 and the second workpiece assembly 4 in the first direction is less than the speed at which the device for compensating spacing 2 adjusts the change in the vertical spacing between the first workpiece assembly 3 and the second workpiece assembly 4 in the second direction, thereby making it possible to realize the compensating for the vertical spacing with better real-time performance and higher accuracy in the measurement or machining process.

In this embodiment, the device for compensating spacing 2 comprises any one of the following: a piezoelectric element, a thermal expansion element, and a flat capacitor.

When the device for compensating spacing 2 comprises a piezoelectric element, the piezoelectric element can be deformed in the thickness direction (i.e., the second direction) according to the applied voltage, and at this time, the control system 1 is capable of generating a control signal of a corresponding voltage based on the magnitude of a first difference ΔD_{C1C2Pi} , this voltage is applied to the piezoelectric element to cause the thickness of the piezoelectric element to change, so as to be able to adjust the height of the first workpiece 32 in the second direction, i.e., to realize the adjustment of the vertical spacing between the first workpiece 32 and the second workpiece 42 in the second direction. That is, adjustment of the vertical spacing between the first workpiece 32 and the second workpiece 42 in the second direction is realized.

When the device for compensating spacing 2 comprises a thermal expansion element and a heating element arranged adjacently to the thermal expansion element, the thermal expansion element can be deformed in a thickness direction (i.e., in the second direction) according to a temperature, and at this time, the control system 1 generates a control signal of a corresponding voltage based on the magnitude of a first difference ΔD_{C1C2Pi} , this voltage is applied to the heating element, and the temperature of the heating element can thus be controlled, and then the heating element is capable of heating the thermal expansion element, causing the thickness of the thermal expansion element to change, thereby adjusting the height of the first workpiece 32 in the second direction, i.e., realizing the adjustment of the vertical spacing between the first workpiece 32 and the second workpiece 42 in the second direction.

When the device for compensating spacing 2 comprises a flat plate capacitor, the spacing of the two flat plates of the flat plate capacitor can be varied in the thickness direction (i.e., in the second direction) according to the applied voltage, whereby the control system 1 is able to generate a control signal of a corresponding voltage based on the magnitude of the first difference ΔD_{C1C2Pi} , this voltage is applied to the flat plate capacitor, so as to cause the spacing of the two flat plates of the flat plate capacitor to be varied accordingly, thereby enabling adjustment of the height of the first workpiece 32 in the second direction, i.e., realizing the adjustment of the vertical spacing between the first workpiece 32 and the second workpiece 42 in the second direction.

It should be noted that the device for compensating spacing 2 in this embodiment may also be a driving device of the first workpiece assembly 3, for example a driving device of the first abutment 31, whereby the control signal can be sent directly to this driving device, and compensating for the vertical spacing between the first workpiece assembly and the second workpiece assembly in the second direction can also be realized.

It should also be noted that the operating device in the present embodiment may periodically perform the compensating for the vertical spacing in accordance with a preset period or a preset horizontal movement distance. In the process of periodically performing the compensating for the vertical spacing, the target measurement position may be updated each time the compensating for the vertical spacing is required, and the updating method may be to set the target measurement position based on the current position of the first sensor; for example, when the compensating for the vertical spacing is required, the next measurement position corresponding to the first sensor will be taken as the target measurement position, and the compensating for the vertical spacing was subsequently performed according to the updated target measurement position.

The present embodiment provides an operating device, wherein the control system firstly controls the relative movement of the first workpiece assembly and the second workpiece assembly in the first direction and drives the first sensor to move to the target measurement position, and subsequently measures the first distance between the first workpiece assembly and the second workpiece assembly by the first sensor; and then controls the first workpiece assembly and the second workpiece assembly to move relative to each other in the first direction and drive the second sensor to the target measurement position, and subsequently measures the second distance between the first workpiece assembly and the second workpiece assembly by the second sensor, and the first difference of subtracting the second distance from the first difference characterizes the amount of deviation generated in the second direction that is perpendicular to or has a vertical component to the first direction when the first workpiece assembly and the second workpiece assembly move relative to each other in the first direction, so that the control system can generate the corresponding control signal according to the first difference, and send the control signal to the device for compensating spacing, and the device for compensating spacing adjusts the vertical spacing between the first workpiece assembly and the second workpiece assembly in the second direction according to the control signal, with the first direction being perpendicular to the second direction; i.e., it realizes compensation for the relative spacing generated in the process of the relative movement of the first workpiece assembly and the second workpiece assembly in the first direction, reduces the amount of deviation of the first workpiece assembly and the second workpiece assembly, and improves the measurement or processing machining accuracy of the operating device.

A second embodiment of the present application relates to an operating device, and the main improvement of the second embodiment with respect to the first embodiment is that, in this embodiment, the first workpiece assembly is further provided with a third sensor facing the second workpiece assembly.

Taking the operating device in FIG. 2 as an example, the third sensor may be a probe among a plurality of probes that are different from both the first sensor and the second sensor, and in the same direction, the distance between the third sensor and the second sensor is the same as the distance between the first sensor and the second sensor, and the probe C3 is selected as the third sensor in this embodiment.

In this embodiment, after the control system 1 sends a control signal to the device for compensating spacing 2 and the device for compensating spacing 2 completes the adjustment of the vertical spacing between the first workpiece 32 and the second workpiece 42 based on the control signal, the control system 1 then controls the first workpiece assembly 3 and the second workpiece assembly 4 to move relative to each other in a first direction and drives the third sensor to move to the target measurement position, and the third distance between the first workpiece assembly and the second workpiece assembly is measured by the third sensor. Specifically, after completing the vertical distance compensation, the control system 1 then controls the driving device to drive the first abutment 31 to move in the first direction according to the preset speed to drive the probe C3 (i.e., the third sensor) to move to the target measurement position at time (t+2Δt), i.e., the first abutment 31 moves a distance a in the time of Δt; when the probe C3 is at the target measurement position, a distance D_{C3Pi} between the tip of the probe C3 and the point Pᵢ (Xᵢ , Yᵢ ) can be measured, and the distance D_{C3Pi} is the third distance between the first workpiece assembly 3 and the second workpiece assembly 4, i.e., the distance D_{C2Pi} is the third distance between the first workpiece 32 and the second workpiece 42.

Subsequently, the control system 1 calculates the second difference ΔD_{C1C3Pi} of subtracting the third distance D_{C3Pi} from the first distance D_{C1Pi}, and the second difference ΔD_{C1C3Pi} characterizes the amount of deviation generated in the vertical direction when the first abutment 31 moves in the horizontal direction in time Δt after the compensating for the vertical spacing, and the control system 1 then compares the first difference ΔD_{C1C2Pi} with the second difference ΔD_{C1C3Pi} , so as to obtain the effect of the current compensating for the vertical spacing, i.e., the control system 1 can determine whether it is necessary to repeat the compensating for the vertical spacing between the first workpiece assembly 3 and the second workpiece assembly 4 in the second direction based on the first difference value ΔD_{C1C2Pi} and the second difference value ΔD_{C1C3Pi}.

In this embodiment, the control system 1 is used to determine that there is no need to repeat the compensating for the vertical spacing between the first workpiece assembly 3 and the second workpiece assembly 4 when the absolute value of the difference between the first difference ΔD_{C1C2Pi} and the second difference ΔD_{C1C3Pi} is less than a preset difference threshold. When the absolute value of the difference between the first difference value ΔD_{C1C2Pi} and the second difference value ΔD_{C1C3Pi} is greater than or equal to the preset difference threshold value, it is determined that it is necessary to repeat the compensating for the vertical spacing between the first workpiece assembly body 3 and the second workpiece assembly body 4. Specifically, the control system 1 firstly calculates the difference between the first difference value △D_{C1C2Pi} and the second difference value △D_{C1C3Pi}, and then compares the absolute value of the difference with the preset difference threshold, when the absolute value of the difference is less than the preset difference threshold, it means that the compensating for the vertical spacing is effective, and it is unnecessary to repeat the compensating for the spacing; when the absolute value of the difference is greater than or equal to the preset difference threshold, it means that the compensating for the vertical spacing is ineffective, and it is also necessary to reuse the probe C1 and the probe C2 to perform the compensating for the vertical spacing, or to reselect the first sensor and the second sensor, for example, to repeat the compensating for the vertical spacing with the probe C3 as the first sensor and the probe C4 as the second sensor, so as to form a closed-loop control of the compensating for the vertical spacing between the first workpiece assembly body 3 and the second workpiece assembly body 4.

A third embodiment of the present application relates to a method for compensating a spacing between two workpieces during relative movement, applied to the operating device in the first embodiment or the second embodiment. The operating device may perform compensating for the vertical spacing using the method for compensating a spacing between two workpieces during relative movement in this embodiment.

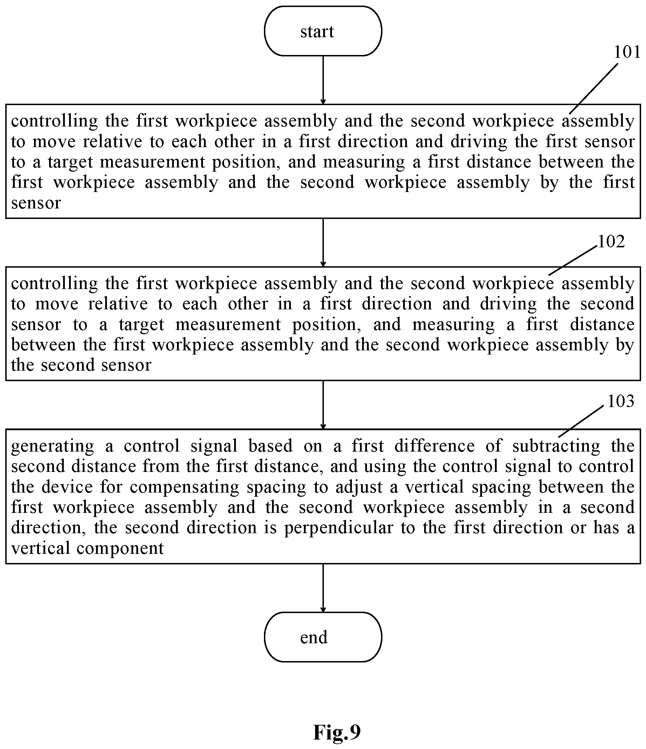

The specific flow of the method for compensating a spacing between two workpieces during relative movement in this embodiment is shown in FIG. 9 and is illustrated as an example with the method for compensating a spacing between two workpieces during relative movement being applied to the operating device of FIG. 2 in the first embodiment.

Step 101, controlling the first workpiece assembly and the second workpiece assembly to move relative to each other in a first direction and drive the first sensor to move to the target measurement position, and measuring the first distance between the first workpiece assembly and the second workpiece assembly by the first sensor.

Specifically, the control system 1 is connected to the driving device and controls the driving device to drive the first abutment 31 to move in a first direction at a preset speed, driving the probe C1 (i.e., the first sensor) to move to the target measurement position at time t; when the probe C1 is at the target measurement position, the distance D_{C1Pi} between the tip of the probe C1 and the point Pᵢ (Xᵢ, Yᵢ ) can be measured, and the distance D_{C1Pi} is the first distance between the first workpiece assembly 3 and the second workpiece assembly 4, and the distance D_{C1Pi} is the first distance between the first workpiece assembly 3 and the second workpiece assembly 4, i.e., the distance D is the first distance between the first workpiece 32 and the second workpiece 42.

Step 102, controlling the first workpiece assembly and the second workpiece assembly to move relative to each other in a first direction and drive the second sensor to move to the target measurement position, and measuring the second distance between the first workpiece assembly and the second workpiece assembly by the second sensor.

Specifically, the control system 1 then controls the driving device to drive the first abutment 31 to move in the first direction at the preset speed to drive the probe C2 (i.e., the second sensor) to move to the target measurement position at time (t + Δt), i.e., the first abutment 31 has moved the distance a in the time Δt; when the probe C2 is at the target measurement position, the distance D_{C2Pi} between the needle tip of the probe C2 and the point Pᵢ (Xᵢ , Y) can be measured, the distance D_{C2Pi} is the second distance between the first workpiece assembly 3 and the second workpiece assembly 4, i.e., the distance D_{C2Pi} is the second distance between the first workpiece 32 and the second workpiece 42.

Step 103 generating a control signal based on the first difference of subtracting the second distance from the first distance, and using the control signal to control the device for compensating spacing to adjust the vertical spacing between the first workpiece assembly and the second workpiece assembly in the second direction, the second direction is perpendicular to or has a vertical component to the first direction.

In one example, generating a control signal based on a first difference of subtracting the second distance from the first distance comprising: generating a control signal for adjusting the vertical spacing between the first workpiece assembly and the second workpiece assembly to increase the first difference when the first difference is greater than zero; generating a control signal for adjusting the vertical spacing between the first workpiece assembly and the second workpiece assembly to decrease the absolute value of the first difference when the first difference is less than zero.

Specifically, when the first difference value ΔD_{C1C2Pi} is greater than zero, it means that the vertical spacing between the first workpiece 32 and the second workpiece 42 in the second direction decreases by the first difference value ΔD_{C1C2Pi} during the movement of the probe C2 (i.e., the second sensor) to the target measurement position at time (t +Δt), and the control system 1 generates a control signal for adjusting the vertical spacing between the first workpiece assembly 3 and the second workpiece assembly 4 to increase the first difference value ΔD_{C1C2Pi} and send to the device for compensating spacing 2, and the distance compensation device 2 increases the vertical spacing between the first workpiece assembly 3 and the second workpiece assembly 42 when it receives the control signal, and the amount of the increase in the vertical spacing is the first difference value ΔD_{C1C2Pi} .

When the first difference value ΔD_{C1C2Pi} is less than zero, it means that the vertical spacing between the first workpiece 32 and the second workpiece 42 in the second direction increases the first difference value ΔD_{C1C2Pi} during the movement of the probe C2 (i.e., the second sensor) to the target measurement position at time (t +Δt), the control system 1 generates a control signal for adjusting the vertical spacing between the first workpiece assembly 3 and the second workpiece assembly 4 to reduce the first difference value ΔD_{C1C2Pi}, and send to the device for compensating spacing 2, and upon receiving the control signal, the device for compensating spacing 2 reduces the vertical spacing between the first workpiece 32 and the second workpiece 42, the amount of reduction of the vertical spacing is the absolute value of the first difference ΔD_{C1C2Pi}.

It should be noted that the present embodiment and subsequent embodiments are illustrated with the first direction being perpendicular to the second direction as an example, and the second direction may also be any direction in which there is a vertical component between it and the first direction.

Since the first embodiment and this embodiment correspond to each other, this embodiment can be implemented in conjunction with the first embodiment. The relevant technical details mentioned in the first embodiment are still effective in this embodiment, and the technical effect that can be achieved in the first embodiment can also be realized in the present embodiment, so in order to reduce repetition, it will not be repeated herein. Accordingly, the relevant technical details mentioned in this embodiment can also be applied in the first embodiment.

In this embodiment, the control system firstly controls the first workpiece assembly and the second workpiece assembly to move relative to each other in a first direction and drives the first sensor to a target measurement position, and then measures the first distance between the first workpiece assembly and the second workpiece assembly by the first sensor; then the control system controls the first workpiece assembly and the second workpiece assembly to move relative to each other in a first direction and drives the second sensor to the target measurement position, and then measures the second distance between the first workpiece assembly and the second workpiece assembly by the second sensor, and the first difference of subtracting the second distance from the first distance characterizes the amount of deviation generated in the second direction that is perpendicular to or has a vertical component to the first direction when the first workpiece assembly and the second workpiece assembly move relative to each other in the first direction, so that the control system can generate a corresponding control signal based on the first difference and send the control signal to the device for compensating spacing, and the device for compensating spacing adjusts the vertical spacing between the first workpiece assembly and the second workpiece assembly in the second direction according to the control signal, with the first direction being perpendicular to the second direction; i.e., it realizes the compensation for the amount of the deviation of the relative spacing generated in the process of the relative movement of the first workpiece assembly and the second workpiece assembly in the first direction, reduces the deviation of the vertical distance between the first workpiece assembly and the second workpiece assembly in the second direction, and improves the measurement or machining accuracy of the operating device.

A fourth embodiment of the present application relates to a method for compensating a spacing between two workpieces during relative movement, and the main improvement of the fourth embodiment with respect to the third embodiment is that a judgment of the effect of the spacing compensation is added.

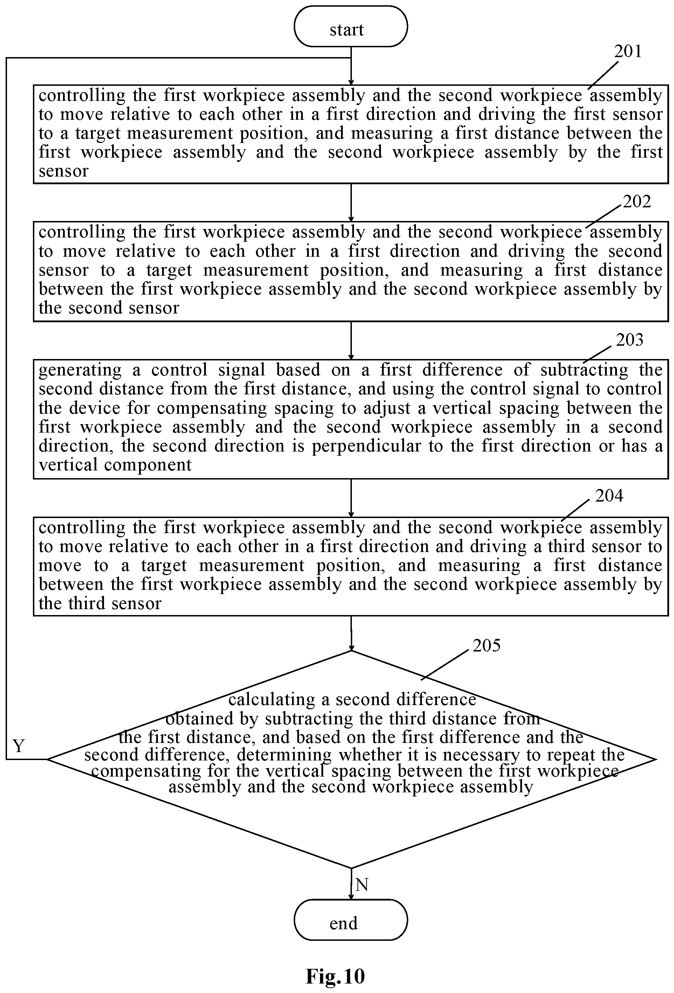

The specific flow of the method for compensating a spacing between two workpieces during relative movement of this embodiment is shown in FIG. 10, and is illustrated as an example with method for compensating a spacing between two workpieces during relative movement being applied to the operating device of FIG. 2 in the first embodiment, wherein the first workpiece assembly 3 is further provided with a third sensor facing the second workpiece assembly 4, the third sensor may be one of a plurality of probes different from the first sensor and the second sensor, and in the same direction, the distance between the third sensor and the second sensor is the same as the distance between the first sensor and the second sensor, and the probe C3 is selected as the third sensor.

Step 201, controlling the first workpiece assembly and the second workpiece assembly to move relative to each other in the first direction and driving the first sensor to move to the target measurement position, and measuring the first distance between the first workpiece assembly and the second workpiece assembly by the first sensor. It is substantially the same as step 101 in the third embodiment and will not be repeated herein.

Step 202, controlling the first workpiece assembly and the second workpiece assembly to move relative to each other in the first direction and driving the second sensor to move to the target measurement position, and measuring the second distance between the first workpiece assembly and the second workpiece assembly by the second sensor. It is substantially the same as step 102 in the third embodiment and will not be repeated herein.

Step 203, generating a control signal based on the first difference of subtracting the second distance from the first distance, and using the control signal to control the device for compensating spacing to adjust the vertical spacing between the first workpiece assembly and the second workpiece assembly in the second direction, wherein the second direction is perpendicular to or has a vertical component to the first direction. It is substantially the same as step 103 in the third embodiment and will not be repeated herein.

Step 204 controlling the first workpiece assembly and the second workpiece assembly to move relative to each other in the first direction and driving the third sensor to move to the target measurement position, and measuring a third distance between the first workpiece assembly and the second workpiece assembly by the third sensor.

Specifically, after the control system 1 sends the control signal to the device for compensating spacing 2 and the device for compensating spacing 2 completes the adjustment of the vertical spacing between the first workpiece 32 and the second workpiece 42 based on the control signal, the control system 1 then controls the first workpiece assembly 3 and the second workpiece assembly 4 to move relative to each other in a first direction and drives the third sensor to move to the target measurement position, and measures the third distance between the first workpiece assembly and the second workpiece assembly by the third sensor. Specifically, after completing the vertical distance compensation, the control system 1 then controls the driving device to drive the first abutment 31 to move in the first direction according to a preset speed to drive the probe C3 (i.e., the third sensor) to move to the target measurement position at time (t+2Δt), i.e., the first abutment 31 moves a distance a in time Δt; when the probe C3 is at the target measurement position, distance D_{C3Pi} between the tip of the probe C3 and point Pᵢ (Xᵢ , Yᵢ ) can be measured, and the distance D_{C3Pi} is the third distance between the first workpiece assembly 3 and the second workpiece assembly 4, i.e., the distance D_{C2Pi} is the third distance between the first workpiece 32 and the second workpiece 42.

Step 205 calculating a second difference obtained by subtracting the third distance from the first distance, and based on the first difference and the second differenc, determining whether it is necessary to repeat the compensating for the vertical spacing between the first workpiece assembly and the second workpiece assembly. If yes, it ends directly; if no, it returns to step 201.

In one example, step 205 is specific as: calculating a second difference obtained by subtracting the third distance from the first distance, and determining whether the absolute value of the difference between the first difference and the second difference is less than a preset difference threshold. If yes, it ends directly; if no, it returns to step 201.

Specifically, the control system 1 calculates the second difference ΔD_{C1C3Pi} of subtracing the third distance D_{C1Pi} from the first distance D_{C3Pi} , and the second difference ΔD_{C1C3Pi} characterizes the amount of deviation generated in the vertical direction when the first abutment 31 moves in the horizontal direction during the time Δt after the compensating for the vertical spacing, and the control system 1 then compares the first difference ΔD_{C1C2Pi} with the second difference ΔD_{C1C3Pi}, so that it can obtain the effect of the current compensating for the vertical spacing, that is, the control system 1 can determine whether the compensating for the vertical spacing between the first workpiece assembly 3 and the second workpiece assembly 4 is necessary to be repeated based on the first difference ΔD_{C1C2Pi} and the second difference ΔD_{C1C3Pi}.

In this embodiment, the control system 1 is used to determine that it is unnecessary to repeat the compensating for the vertical spacing between the first workpiece assembly 3 and the second workpiece assembly 4 when the absolute value of the difference between the first difference ΔD_{C1C2Pi} and the second difference ΔD_{C1C3Pi} is less than a preset difference threshold. When the absolute value of the difference between the first difference ΔD_{C1C2Pi} and the second difference ΔD_{C1C3Pi} is greater than or equal to the preset difference threshold, it is determined that it is necessary to repeat the compensating for the vertical spacing between the first workpiece assembly 3 and the second workpiece assembly 4, i.e., to return to step 201, thereby forming a closed-loop control of the compensating for the vertical spacing between the first workpiece assembly 3 and the second workpiece assembly 4. Specifically, the control system 1 first calculates the difference between the first difference ΔD_{C1C2Pi} and the second difference △D_{C1C3Pi}, and then compares the absolute value of the difference with a preset difference threshold, and when the absolute value of the difference is less than the preset difference threshold, it means that the compensating for the vertical spacing is effective, and it is unnecessary to repeat the compensating for spacing; and when the absolute value of the difference is greater than or equal to the preset difference threshold, it means that the vertical distance compensation is ineffective, and it is also necessary to reuse the probe C1 and the probe C2 to perform the compensating for the vertical spacing, or to re-select the first sensor and the second sensor, such as to repeat the compensating for the vertical spacing with the probe C3 as the first sensor and the probe C4 as the second sensor.

Since the second embodiment and this embodiment correspond to each other, this embodiment can be implemented in conjunction with the second embodiment. The relevant technical details mentioned in the second embodiment are still effective in the present embodiment, and the technical effects that can be achieved in the second embodiment can also be realized in this embodiment, and in order to reduce repetition, they will not be repeated herein. Accordingly, the relevant technical details mentioned in the present embodiment can also be applied in the second embodiment.

Preferred embodiments of the present application have been described in detail above, but it should be understood that aspects of the embodiments can be modified to employ aspects, features and ideas from various patents, applications and publications to provide additional embodiments, if desired.

These and other variations to the embodiments can be made in view of the detailed description above. In the claims, the terms used should not be considered as limiting the specific embodiments disclosed in the specification and claims but should be understood to include all possible embodiments together with the full scope of equivalents enjoyed by those claims.

## Claims

1. An operating device **characterized in that** comprising: a control system, a device for compensating spacing, a first workpiece assembly and a second workpiece assembly, said control system is communicatively connected to said first workpiece assembly and/or said second workpiece assembly, said first workpiece assembly is provided with a first sensor and a second sensor facing said second workpiece assembly; said first workpiece assembly and/or said second workpiece assembly is provided with the device for compensating spacing, said control system is communicatively connected to said device for compensating spacing, said first sensor, and said second sensor, respectively;
said control system is used to control said first workpiece assembly and said second workpiece assembly to move relative to each other in a first direction and drive said first sensor to a target measurement position, and measure a first distance between said first workpiece assembly and said second workpiece assembly by said first sensor;
said control system is used to control said first workpiece assembly and said second workpiece assembly to move relative to each other in the first direction and drive said second sensor to said target measurement position, and measure a second distance between said first workpiece assembly and said second workpiece assembly by said second sensor;
said control system is further used to generate a control signal based on a first difference of subtracting the second distance from the first distance, and send the control signal to the device for compensating spacing;
said distance compensation device is used to adjust a vertical spacing between said first workpiece assembly and said second workpiece assembly in a second direction according to the control signal, and the second direction is perpendicular to or has a vertical component to the first direction.

2. The operating device according to claim 1, **characterized in that** said control system is used to generate a control signal for adjusting the vertical spacing between said first workpiece assembly and said second workpiece assembly to increase said first difference when said first difference is greater than zero;
said device for compensating spacing is used to generate a control signal for adjusting said vertical spacing between said first workpiece assembly and said second workpiece assembly to reduce the absolute value of said first difference when said first difference is less than zero.

3. The operating device according to claim 1, **characterized in that** said first workpiece assembly is further provided with a third sensor facing said second workpiece assembly; said third sensor is communicatively connected to said control system;
said control system is further used to control said first workpiece assembly and said second workpiece assembly to move relative to each other in the first direction and drive said third sensor to said target measuring position, and measure a third distance between said first workpiece assembly and said second workpiece assembly by said third sensor;
said control system is further used to calculate a second difference obtained by subtracting the third distance from the first distance, and based on the first difference and the second difference, determine whether it is necessary to repeat the compensating for the vertical spacing between the first workpiece assembly and the second workpiece assembly.

4. The operating device according to claim 3, **characterized in that** said control system is used to determine that it is unnecessary to repeat the compensating for the vertical spacing between said first workpiece assembly and said second workpiece assembly when the absolute value of the difference between said first difference and said second difference is less than a preset difference threshold;
said control system is used to determine that it is necessary to repeat said compensating for the vertical spacing between said first workpiece assembly and said second workpiece assembly when the absolute value of the difference between said first difference and said second difference is greater than or equal to the preset difference threshold.

5. The operating device according to claim 1, **characterized in that** said first workpiece assembly and said second workpiece assembly move relative to each other in the first direction at a speed less than the speed at which said device for compensating spacing adjusts the change in the vertical spacing between said first workpiece assembly and said second workpiece assembly in the second direction.

6. The operating device according to claim 1, **characterized in that** said first workpiece assembly comprises: a first abutment, a first workpiece fixed to said first abutment and a plurality of probes provided on said first workpiece; said first sensor and said second sensor are two different probes of said first workpiece respectively;
said second workpiece assembly comprises: a second abutment and a second workpiece provided on said second abutment; said device for compensating spacing is provided between said first abutment and said first workpiece, and/or said device for compensating spacing is provided between said second abutment and said second workpiece; and said target measurement position corresponds to a preset area on a surface to be operated of said second workpiece;
said probe is used to measure a distance between the tip of said probe and the surface to be operated of said second workpiece;
said device for compensating spacing is used for adjusting the vertical spacing between said first workpiece and said second workpiece according to the control signal.

7. The operating device according to claim 1, **characterized in that** said first workpiece assembly comprises: a first abutment, a first workpiece fixed to said first abutment and a sensor auxiliary member fixed to said first workpiece; said first sensor and said second sensor are fixed to said sensor auxiliary member respectively;
said second workpiece assembly comprises: a second abutment, a second workpiece provided on said second abutment, and an measured auxiliary member fixed to said second workpiece;
said device for compensating spacing is provided between said first abutment and said first workpiece, and/or said device for compensating spacing is provided between said second abutment and said second workpiece;
said target measurement position corresponds to a preset area on said measured auxiliary member;
said first sensor is used to measure a distance between said sensor auxiliary member and the preset area on said measured auxiliary member;
said second sensor is used to measure a distance between said sensor auxiliary member and the preset area on said measured auxiliary member;
said device for compensating spacing is used for adjusting the vertical spacing between said first workpiece and said second workpiece according to the control signal.

8. The operating device according to claim 1, **characterized in that** said first workpiece assembly comprises: a first abutment, a first workpiece fixed to said first abutment, a first abutment auxiliary member fixed to said first abutment, and a sensor auxiliary member fixed to said first abutment auxiliary member; and said first sensor and said second sensor are fixed to said sensor auxiliary member respectively;
said second workpiece assembly comprises: a second abutment, a second workpiece provided on said second abutment, a second abutment auxiliary member fixed to said second abutment, and an measured auxiliary member fixed to said second abutment auxiliary member;
said device for compensating spacing is provided between said first abutment and said first workpiece, and/or said device for compensating spacing is provided between said second abutment and said second workpiece;
said target measurement position corresponds to a preset area on said measured auxiliary member;
said first sensor is used to measure a distance between said sensor auxiliary member and the preset area on said measured auxiliary member;
said second sensor is used to measure a distance between said sensor auxiliary and the preset area on said measured auxiliary member;
said device for compensating spacing is used for adjusting the vertical spacing between said first workpiece and said second workpiece according to the control signal.

9. The operating device according to claim 1, **characterized in that** said first workpiece assembly comprises: a first abutment, a first workpiece fixed to said first abutment and a machining member fixed to said first workpiece; said first sensor and said second sensor are fixed to said first workpiece respectively;
said second workpiece assembly comprises: a second abutment, a workpiece fixing portion, and a second workpiece, said second workpiece is fixed to said second abutment by said workpiece fixing portion;
said device for compensating spacing is provided between said first abutment and said first workpiece, and/or said device for compensating spacing is provided between said second abutment and said workpiece fixing portion;
said machining member is used to machine said second workpiece;
said target measurment position corresponds to a preset area of an unmachined portion of said second workpiece, or said target measurment position corresponds to a preset area of a machined portion of said second workpiece;
said first sensor is used to measure a distance between said first workpiece and the preset area on said second workpiece;
said second sensor is used to measure a distance between said first workpiece and the preset area on said second workpiece;
said device for compensating spacing is used for adjusting the vertical spacing between said first workpiece and said second workpiece according to the control signal.

10. The operating devices according to any one of claims 1 to 9, **characterized in that** said device for compensating spacing comprises any one of the following: a piezoelectric element, a thermal expansion element and a flat capacitor.

11. A method for compensating a spacing between two workpieces during relative movement, **characterized in that**, applied to an operating device according to any one of claims 1 to 10, said method comprises:
controlling the first workpiece assembly and the second workpiece assembly to move relative to each other in a first direction and driving the first sensor to a target measurement position, and measuring a first distance between said first workpiece assembly and said second workpiece assembly by said first sensor;
controlling said first workpiece assembly and said second workpiece assembly to move relative to each other in a first direction and driving the second sensor to said target measurement position, and measuring a second distance between said first workpiece assembly and said second workpiece assembly by said second sensor;
generating a control signal based on a first difference of subtracting said second distance from said first distance, and using said control signal to control said device for compensating spacing to adjust a vertical spacing between said first workpiece assembly and said second workpiece assembly in a second direction, the second direction is perpendicular to or has a vertical component to the first direction

12. The method according to claim 11, **characterized in that** said generating a control signal based on a first difference of subtracting said second distance from said first distance comprises:
when said first difference is greater than zero, generating the control signal for adjusting the vertical spacing between said first workpiece assembly and said second workpiece assembly to increase said first difference;
when said first difference is less than zero, generating the control signal for adjusting the vertical spacing between said first workpiece assembly and said second workpiece assembly to reduce the absolute value of said first difference.

13. The method according to claim 11, **characterized in that** after said using the control signal to control said device for compensating spacing to adjust the vertical spacing between said first workpiece assembly and said second workpiece assembly in the second direction, further comprising:
controlling said first workpiece assembly and said second workpiece assembly to move relative to each other in the first direction and driving said third sensor to said target measurement position, and measuring a third distance between said first workpiece assembly and said second workpiece assembly by said third sensor;
calculating a second difference obtained by subtracting said third distance from said first distance, and based on said first difference and said second difference, determining whether it is necessary to repeat the compensating for the vertical spacing between said first workpiece assembly and said second workpiece assembly.

14. The method according to claim 13, **characterized in that** said based on said first difference and said second difference, determining whether it is necessary to repeat the vertical compensation between said first workpiece assembly and said second workpiece assembly comprising:
when the absolute value of the difference between said first difference and said second difference is less than a preset difference threshold, determining that it is unnecessary to repeat the vertical compensation between said first workpiece assembly and said second workpiece assembly;
when the absolute value of the difference between said first difference and said second difference is greater than or equal to the preset difference threshold, determining that it is necessary to repeat the vertical compensation between said first workpiece assembly and said second workpiece assembly.
